Europäisches Patentamt

European Patent Office

Office européen des brevets

(19)

(11) Publication number: **0 476 137 A1**

## EUROPEAN PATENT APPLICATION
### published in accordance with Art. 158(3) EPC

(12)

(21) Application number: 91905320.7

(22) Date of filing: 01.03.91

(86) International application number:
**PCT/JP91/00278**

(87) International publication number:
**WO 91/13721 (19.09.91 91/22)**

(51) Int. Cl.⁵: **B23Q 15/00**, G05B 19/403

(30) Priority: **08.03.90 JP 54916/90**

(43) Date of publication of application:
**25.03.92 Bulletin 92/13**

(84) Designated Contracting States:
**DE**

(71) Applicant: **FANUC LTD.**
**3580, Shibokusa Aza-Komanba, Oshino-mura**
**Minamitsuru-gun, Yamanashi 401-05(JP)**

(72) Inventor: **SEKI, Masaki, 5-17-23, Kugayama**
**Suginami-ku**
**Tokyo 168(JP)**
Inventor: **TAKEGAHARA, Takashi, 256-2,**
**Nishiteragata-machi**
**Hachioji-shi**
**Tokyo 192-01(JP)**
Inventor: **MATSUNAKA, Toru, Fanuc**
**Manshonharimomi**
**3511-1, Shibokusa-Oshino-mura**
**Minamitsuru-gun Yamanashi 401-05(JP)**

(74) Representative: **Billington, Lawrence Emlyn**
**Haseltine Lake & Co Hazlitt House 28,**
**Southampton Buildings Chancery Lane**
**London WC2A 1AT(GB)**

(54) **METHOD OF SETTING BORING CONDITION.**

(57) A method of setting a boring condition by which the working condition for defining of boring in an automatic programming can be set easily. In this method,when one of various registered bore form definitions displayed is selected by an operator, it is asked whether change of a registered working condition corresponding to the selected definition is necessary or not (S1) and if unnecessary, the registered working condition is set as a set working condition (S2). When the changing is selected, first and second coefficients are read out from a look-up table according to the combination of a work material represented by manually inputted data and the kind of boring relative to the selected bore form definition and the size of the tool. A rotational speed of the main shaft is calculated on the basis of the first coefficient and the manually set cutting speed, and a feed speed is calculated on the basis of the calculated rotational speed and the second coefficient to set both the calculated rotation and feed speeds as the working condition (S3). After the set working condition is changed as required, inputting a bore position (S7, S8), the defining of the boring is completed.

EP 0 476 137 A1

FIG.2

```
        ┌──────────────────────┐
        │       DRILLING       │
        │ DEFINITION PROCESS   │
        └──────────┬───────────┘
                   ↓
S1 ┌─────────────────────────────────────┐
   │ DISPLAY QUESTION MESSAGE FOR        │
   │ AUTOMATIC MODIFICATION OF           │
   │ REGISTERED WORKING CONDITIONS       │
   └─────────────────┬───────────────────┘
                     ↓
S2                 ╱─────────────────╲        NO
               ╱  MODIFICATION REQUIRED ?  ╲──────┐
                  ╲─────────────────╱             │
                     ↓ YES                        │
S3 ┌─────────────────────────────────────┐       │
   │ MODIFY REGISTERED WORKING           │       │
   │ CONDITIONS IN ACCORDANCE WITH       │       │
   │ WORKPIECE MATERIAL                  │       │
   └─────────────────┬───────────────────┘       │
                     ←───────────────────────────┘
                     ↓
S4 ┌─────────────────────────────────────┐
   │ DISPLAY QUESTION MESSAGE FOR        │
   │ MANUAL MODIFICATION AND             │
   │ IDENTIFICATION OF SET WORKING       │
   │ CONDITIONS                          │
   └─────────────────┬───────────────────┘
                     ↓
S5          ╱────────────────────────╲     NO
         ╱ MODIFICATION/IDENTIFICATION  ╲──────┐
            ╲      REQUIRED ?          ╱        │
                     ↓ YES                      │
S6 ┌─────────────────────────────────────┐     │
   │ DISPLAY SET WORKING CONDITIONS      │     │
   └─────────────────┬───────────────────┘     │
                     ↓                          │
S7 ┌─────────────────────────────────────┐     │
   │ MODIFY SET WORKING CONDITIONS       │     │
   └─────────────────┬───────────────────┘     │
                     ←──────────────────────────┘
                     ↓
S8 ┌─────────────────────────────────────┐
   │ SET HOLE POSITION                   │
   └─────────────────┬───────────────────┘
                     ↓
              ┌────────────┐
              │   E N D    │
              └────────────┘
```

2

## Technical Field

The present invention relates to a method for giving hole-machining definitions in NC programming, and more particularly, to a hole-machining condition setting method which makes it easy to perform a machining condition setting for hole-machining definitions in interactive automatic NC programming.

## Background Art

It is known to automatically prepare, by the use of an automatic programming apparatus, a hole-machining program for carrying out desired types of hole-machining onto a workpiece at desired positions with desired sizes. On this occasion, in order to provide the programming apparatus with information required for the hole-machining program preparation, hole-machining definitions are given to define various conditions which include hole-machining positions, and machining conditions such as spindle rotation rate, feed rate, etc. Since suitable machining conditions vary in dependence on types of workpiece material, types of hole-machining, and tool diameters, it is preferable to set the machining conditions in consideration of the types of workpiece material, types of hole-machining, and tool diameters. However, much labor is required to manually set the machining conditions in consideration of all of the types of workpiece material, types of hole-machining, and tool diameters. Moreover, errors are liable to occur in the machining condition setting.

In this respect, conventionally, machining conditions for a desired number of frequently used combinations of types of workpiece material, types of hole-machining, and tool diameters, among various combinations of these parameters, are registered beforehand, and hole-machining definitions are given by utilizing the machining conditions thus registered. If the kind of material of a workpiece to be actually machined is different from that of the workpiece material associated with the registered machining conditions used for the hole-machining definition, these registered machining conditions are manually modified, to thereby obtain machining conditions suited for the actual workpiece material. Thus, according to the aforementioned conventional method, the registered machining conditions must be frequently modified by manual operations, so that the setting of the machining conditions suited for the workpiece material still requires much labor, and the machining condition setting is susceptible to errors as yet.

To eliminate these problems, it is known to register machining conditions for more kinds of workpiece materials. In this case, however, much labor is required in the registration of the machining conditions, and errors are liable to occur in the machining condition registration.

## Disclosure of the Invention

The object of the present invention is to provide a hole-machining condition setting method which is capable of easily, accurately, and rapidly carrying out a machining condition setting for a hole-machining definition in automatic NC programming.

In order to achieve the aforementioned object, the present invention comprises the steps of: (a) storing beforehand coefficients for each of combinations of types of workpiece material, types of drilling, and tool diameters, the coefficients being employed to calculate machining conditions; (b) registering beforehand a plurality of hole shape definitions each associated with a particular type of hole-machining and a particular tool diameter; (c) reading out coefficients corresponding to the combination of one particular type of hole-machining, one particular tool diameter, and a type of preset workpiece material when one of the plurality of registered hole shape definitions is manually selected, said one particular type of hole-machining and said one particular tool diameter being associated with the selected one hole shape definition; (d) automatically calculating machining conditions suited for the type of the preset workpiece material, by using the coefficients thus read; and (e) setting the calculated machining conditions, as preset machining conditions suited for the type of the preset workpiece material.

As mentioned above, according to the present invention, when one of the hole shape definitions registered beforehand is manually selected, the machining conditions suited for the preset workpiece material are automatically calculated by using the coefficients corresponding to the combination of the type of hole-machining and the tool diameter which are associated with the selected one hole shape definition. This makes it possible to easily, accurately and rapidly set the machining conditions suited for the workpiece material, with the aid of the hole shape definition registered beforehand.

## Brief Description of the Drawings

Fig. 1 is a block diagram showing the principal part of an automatic programming apparatus for embodying a programming method according to one embodiment of the present invention; and
Fig. 2 is a flow chart showing a machining condition setting process according to the one embodiment of the present invention.

Best Mode of Carrying Out of the Invention

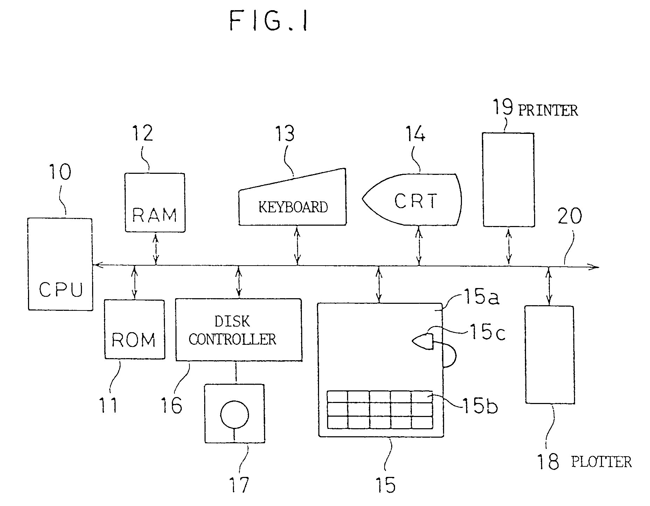

Referring to Fig. 1, an automatic programming apparatus comprises a processor 10, a read-only memory (ROM) 11 storing therein a control program used for operation control of the programming apparatus, and a random access memory (RAM) 12 for storing system programs, various data, etc. The programming apparatus further comprises a keyboard 13, a graphic display (CRT) 14, a tablet device 15, a disk controller 16 arranged to be loaded with a floppy disk 17, a plotter 18 for outputting prepared drawings, and a printer 19. The elements 11 to 16, 18 and 19 are connected to the processor 10 through busses 20.

The tablet device 15 includes a screen region 15a corresponding to a CRT screen, a menu table 15b provided with various menu items, and a tablet cursor 15c movable on the screen region 15a and the menu table 15b. A CRT cursor interlocked in motion with the cursor 15c is moved on the CRT screen by moving the tablet cursor 15c within the screen region 15a, to specify a desired one of the items displayed on the CRT screen, and the tablet cursor 15c is moved on the menu table 15b to specify a desired menu item. The tablet device 15 is also arranged to permit pick-input of the items thus specified.

The floppy disk 17 is stored beforehand with various system programs, a plurality of hole shape definitions, and machining conditions (spindle rotation rate and feed rate) respectively associated with these hole shape definitions. Each of the hole shape definitions specifies a particular type of hole-machining and a particular tool diameter. There are various types of hole-machining such as center drilling, drilling, deep hole drilling, boring, reaming, fine boring, back boring, tapping, etc. Further, the floppy disk 17 is stored with a lookup table shown in Table 1. The lookup table is stored with first and second coefficients for each of combinations of types of workpiece material, types of hole-machining (hole types), and tool diameter, these coefficients being employed to determine the machining conditions.

Table 1

| Workpiece material | Hole diameter | Tool diameter | First coefficient | Second coefficient |
|---|---|---|---|---|
| A1 | B1 | R111 | a111 | b111 |
|  |  | R112 | a112 | b112 |
|  |  | ⋮ | ⋮ | ⋮ |
|  |  | R11n | a11n | b11n |
|  | B2 | R121 | a121 | b121 |
|  | ⋮ | ⋮ | ⋮ | ⋮ |
|  | Bm | R1mm | a1mm | b1mm |
| A2 | B1 | R211 | a211 | b211 |
|  |  | R212 | a212 | b212 |
|  |  | ⋮ | ⋮ | ⋮ |
|  | B2 | R221 | a221 | b221 |
|  | ⋮ | ⋮ | ⋮ | ⋮ |
|  | Bm | R2m1 | a2m1 | b2m1 |
| A3 | B1 | R311 | a311 | b311 |
| ⋮ | ⋮ | ⋮ | ⋮ | ⋮ |
| ⋮ | ⋮ | ⋮ | ⋮ | ⋮ |
| Ak | B1 | Rk11 | ak11 | bk11 |
| ⋮ | ⋮ | ⋮ | ⋮ | ⋮ |

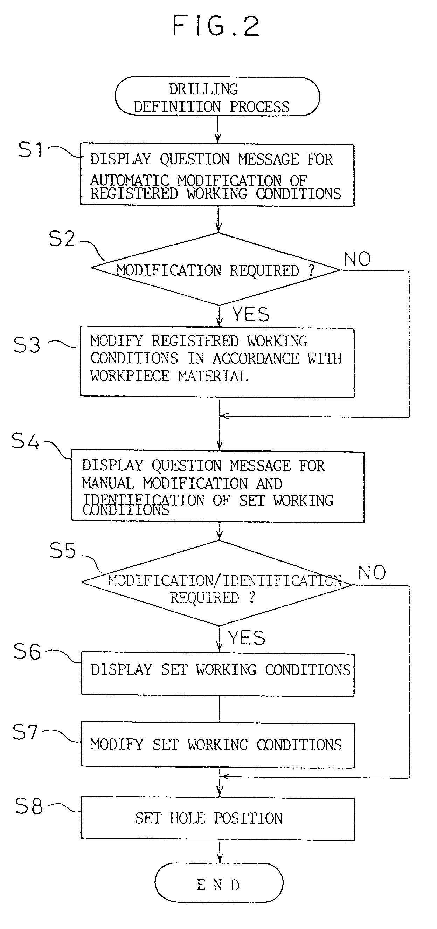

Referring to Fig. 2, the operation of the programming apparatus will be explained.

When the programming apparatus is started, the system programs, lookup table, registered hole shape definitions, and registered machining conditions are transferred to and stored in the RAM 12 from the floppy disk 17 through the disk controller 16, under the control of the processor 10.

An operator moves the tablet cursor 15c onto an item "hole-machining definition" on the menu table 15b, and then picks the same item, to thereby set the operation mode of the programming apparatus to a hole-machining definition mode. In response to this mode setting, various registered hole shape definitions are displayed on the CRT screen under the control of the processor 10. The operator operates the tablet device 15 to manually select that one of the registered hole shape definitions, displayed on the screen, which is to be utilized.

In response to the selection of the one registered hole shape definition, the processor 10 starts a hole shape definition process shown in Fig. 2. First, under the control of the processor 10, a first question message to inquire as to whether or not to make an automatic modification of the registered machining conditions corresponding to the selected registered hole shape definition is displayed on the CRT screen, together with two choices "YES" and "NO" (Step S1). If the operator selects the choice "NO" by operating the tablet device 15, the processor 10 concludes that the registered machining conditions need not be automatically modified, and immediately sets the registered machining conditions corresponding to the selected hole shape definition, as preset machining conditions (Step S2).

On the other hand, if the operator selects the choice "YES" in response to the first question message, in accordance with the combination of the type of actual workpiece material which is represented by workpiece material data specified beforehand, and the type of hole-machining and the tool diameter which are respectively associated with the registered hole shape definition manually selected in advance, the processor 10 reads out, from the lookup table shown in Table 1, the first coefficient for the calculation of the spindle rotation rate and the second coefficient for the calculation of the feed rate, these coefficients corresponding to the aforementioned combination. For example, first and second coefficients a111 and b111 are read out in accordance with the combination of type A1 of workpiece material, type B1 of hole-machining (hole type), and tool diameter R111.

Then, the processor 10 calculates a spindle rotation rate suited for the type of actual workpiece material, type of hole-machining, and tool diameter, in accordance with a first predetermined arithmetic expression which represents the spindle rotation rate as a function of the cutting speed and the first coefficient. Further, the processor 10 calculates a feed rate suited for the type of actual workpiece material, type of hole-machining, and tool diameter, in accordance with a second predetermined arithmetic expression which represents the feed rate as a function of the spindle rotation rate and the second coefficient. Next, the processor sets the calculated spindle rotation rate and the calculated feed rate, as preset machining conditions (Step S3). Thus, the preset machining conditions suited for the type of actual workpiece material, type of hole-machining, and tool diameter are obtained.

Then, a second question message to inquire as to the necessity of confirmation/manual modification of the preset machining conditions is displayed on the CRT screen, together with choices "YES" and "NO," under the control of the processor 10 (Step S4). If it is determined that the choice "NO" has been selected by the operator (Step S5), the processor 10 proceeds to a hole position setting process (Step S8). In this hole position setting process, the processor 10 sets a hole position which corresponds to data manually entered by the operator, whereupon the hole-machining definition process of Fig. 2 ends.

On the other hand, if it is concluded in Step S5 that the choice "YES" is selected in response to the second question message, the registered machining conditions, corresponding to the selected hole shape definition and set as the preset machining conditions in response to the selection of the choice "NO" in Step S2, or the set machining conditions calculated in response to the selection of the choice "YES" in Step S2 are displayed on the CRT screen under the control of the processor 10 (Step S6). After confirming the set machining conditions displayed on the screen, the operator enters data for set machining condition modification, as required, through the keyboard 13. In response to the data entry, the processor 10 modifies the preset machining conditions, and then sets the modified machining conditions as new preset machining conditions (Step S7), whereupon the aforementioned Step S8 for the hole position setting process is entered.

After setting the machining conditions by utilizing the one registered hole shape definition in this manner, the operator successively selects desired registered hole shape definitions, if necessary. Every time the registered hole shape definition is selected, the processor 10 executes the hole-machining definition process of Fig. 2.

The present invention is not limited to the embodiment described above, and various modifications may be made.

For example, in the embodiment, when one of the plurality of hole shape definitions is selected, a corresponding one of the plural sets of machining conditions, registered beforehand together with the hole shape definitions, is immediately set as the preset machining conditions. Alternatively, the preset machining conditions may be always calculated in response to the selection of one of the registered hole shape definitions. In this case, the preset machining conditions may be calculated in the same manner as in the case of the embodiment. According to this modification, the registered machining conditions are not set immediately as the preset machining conditions. Thus, it is only necessary to register the hole shape definitions beforehand, and the processes of Steps S1 and S2 shown in Fig. 2 are unnecessary.

## Claims

1. A hole-machining condition setting method comprising the steps of:

   (a) storing beforehand coefficients for each of combinations of types of workpiece material, types of hole-machining, and tool diameters, said coefficients being employed to calculate machining conditions;

   (b) registering beforehand a plurality of hole shape definitions each associated with a particular type of hole-machining and a particular tool diameter;

   (c) reading out coefficients corresponding to the combination of one particular type of hole-machining, one particular tool diameter, and a type of preset workpiece material when one of said plurality of registered hole shape definitions is manually selected, said one particular type of hole-machining and said one particular tool diameter being associated with the selected one hole shape definition;

(d) automatically calculating machining conditions suited for the type of the preset workpiece material by using the coefficients thus read; and

(e) setting the calculated machining conditions, as preset machining conditions suited for the type of the preset workpiece material.

2. A hole-machining condition setting method according to claim 1, wherein said step (d) includes the steps of:

(d1) automatically calculating a spindle rotation rate suited for the type of the preset workpiece material on the basis of a preset cutting speed and a first coefficient which corresponds to the combination of the particular type of hole-machining, the particular tool diameter, and the type of the preset workpiece material, the two latters of which are associated with the selected one registered hole shape definition; and

(d2) automatically calculating a feed rate suited for the type of the preset workpiece material on the basis of the calculated spindle rotation rate and a second coefficient which corresponds to the combination of the particular type of hole-machining, the particular tool diameter, and the type of the preset workpiece material, the two latters of which are associated with the selected one registered hole shape definition; and

wherein said step (e) includes a step of setting the calculated spindle rotation rate and the calculated feed rate, as the preset machining conditions.

3. A hole-machining condition setting method according to claim 1, further including the steps of:

(f) registering beforehand plural sets of machining conditions corresponding individually to the plurality of hole shape definitions;

(g) determining whether or not that one of the plural sets of registered machining conditions which corresponds to the selected one registered hole shape definition should be modified, after the manual selection of the one registered hole shape definition;

(h) preventing the execution of said steps (c) and (d) and immediately setting the corresponding one set of registered machining conditions, as the preset machining conditions, if it is concluded that the corresponding one set of registered machining conditions should not be modified; and

(i) permitting the execution of said steps (c) and (d) if it is concluded that the corresponding one set of registered machining conditions should be modified.

# FIG.1

19 PRINTER

12

13

14

10

RAM

KEYBOARD

CRT

20

CPU

15a

15c

ROM

DISK
CONTROLLER

15b

11

16

18  PLOTTER

17

15

# FIG.2

```
        ( DRILLING
          DEFINITION PROCESS )
                │
S1 ─┐   ┌─────────────────────────────┐
    └── │ DISPLAY QUESTION MESSAGE FOR │
        │ AUTOMATIC MODIFICATION OF    │
        │ REGISTERED WORKING CONDITIONS│
        └─────────────────────────────┘
                │
S2 ─┐         ◇─────────────────◇          NO
    └──  < MODIFICATION REQUIRED ? >──────────┐
              ◇─────────────────◇             │
                │ YES                          │
S3 ─┐   ┌─────────────────────────────┐       │
    └── │ MODIFY REGISTERED WORKING    │       │
        │ CONDITIONS IN ACCORDANCE WITH│       │
        │ WORKPIECE MATERIAL           │       │
        └─────────────────────────────┘       │
                │ ◄───────────────────────────┘
S4 ─┐   ┌─────────────────────────────┐
    └── │ DISPLAY QUESTION MESSAGE FOR │
        │ MANUAL MODIFICATION AND      │
        │ IDENTIFICATION OF SET WORKING│
        │ CONDITIONS                   │
        └─────────────────────────────┘
                │
S5 ─┐         ◇─────────────────◇          NO
    └──  < MODIFICATION/IDENTIFICATION >───────┐
           <      REQUIRED ?        >          │
              ◇─────────────────◇             │
                │ YES                          │
S6 ─┐   ┌─────────────────────────────┐       │
    └── │ DISPLAY SET WORKING CONDITIONS│      │
        └─────────────────────────────┘       │
                │                              │
S7 ─┐   ┌─────────────────────────────┐       │
    └── │ MODIFY SET WORKING CONDITIONS │      │
        └─────────────────────────────┘       │
                │ ◄───────────────────────────┘
S8 ─┐   ┌─────────────────────────────┐
    └── │ SET HOLE POSITION            │
        └─────────────────────────────┘
                │
            ( E N D )
```

# INTERNATIONAL SEARCH REPORT

International Application No  PCT/JP91/00278

**I. CLASSIFICATION OF SUBJECT MATTER** (if several classification symbols apply, indicate all) [6]

According to International Patent Classification (IPC) or to both National Classification and IPC

Int. Cl⁵  B23Q15/00, G05B19/403

**II. FIELDS SEARCHED**

| Minimum Documentation Searched [7] | |
|---|---|
| Classification System | Classification Symbols |
| IPC | B23Q15/00, B23B47/00-47/24, G05B19/403 |

| Documentation Searched other than Minimum Documentation to the Extent that such Documents are Included in the Fields Searched [8] | |
|---|---|
| Jitsuyo Shinan Koho | 1950 – 1991 |
| Kokai Jitsuyo Shinan Koho | 1972 – 1991 |

**III. DOCUMENTS CONSIDERED TO BE RELEVANT** [9]

| Category [*] | Citation of Document, [11] with Indication, where appropriate, of the relevant passages [12] | Relevant to Claim No. [13] |
|---|---|---|
| A | JP, A, 62-28154 (Fanuc Ltd.), February 6, 1987 (06. 02. 87), (Family: none) | 1-3 |
| A | JP, A, 1-216745 (Toyoda Machine Works, Ltd.), August 30, 1989 (30. 08. 89), (Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 20, 1991 (20. 05. 91) | June 3, 1991 (03. 06. 91) |
| International Searching Authority | Signature of Authorized Officer |
| Japanese Patent Office | |

Form PCT/ISA/210 (second sheet) (January 1985)